(19) Europäisches Patentamt
European Patent Office
Office européen des brevets

(11) **EP 4 115 724 B1**

(12) **EUROPÄISCHE PATENTSCHRIFT**

(45) Veröffentlichungstag und Bekanntmachung des Hinweises auf die Patenterteilung:
**11.06.2025 Patentblatt 2025/24**

(21) Anmeldenummer: **22169907.7**

(22) Anmeldetag: **26.04.2022**

(51) Internationale Patentklassifikation (IPC):
**A01D 41/127** (2006.01)

(52) Gemeinsame Patentklassifikation (CPC):
**A01D 41/127; A01D 41/1273**

(54) **VERLUSTPRÜFSCHALE ZUR BESTIMMUNG DES DRUSCHVERLUSTES VON ERNTEMASCHINEN**

LOSS TEST PANEL FOR DETERMINING THE THRESHING LOSS OF HARVESTERS

TABLETTE DE CONTRÔLE DES PERTES DESTINÉE À LA DÉTERMINATION DE LA PERTE DE BATTAGE DES ENGINS D'ABATTAGE-FAÇONNAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.07.2021 DE 102021003507**

(43) Veröffentlichungstag der Anmeldung:
**11.01.2023 Patentblatt 2023/02**

(73) Patentinhaber: **Piontek, Axel-Michael 23701 Zarnekau (DE)**

(72) Erfinder: **Piontek, Axel-Michael 23701 Zarnekau (DE)**

(74) Vertreter: **Patentanwaltskanzlei Methling Danziger Straße 20 23758 Wangels Hansühn (DE)**

(56) Entgegenhaltungen:
DD-A1- 52 020      DE-B3- 102016 201 413
DE-C2- 10 062 114      US-A1- 2019 335 659

EP 4 115 724 B1

**Beschreibung**

Die Erfindung betrifft eine Verlustprüfschale nach dem Oberbegriff gemäß Anspruch 1.

Eine derartige Verlustprüfschale ist aus der DD 52 020 A bekannt.

Die Bestimmung des Druschverlustes dient der Optimierung der Betriebsparameter der Erntemaschine wie beispielsweise der Fahrgeschwindigkeit und des Durchsatzes.

Derartige Verlustprüfschalen sind aus der DE 100 62 114 C2 und der DE 10 2005 028 997 A1 bekannt. Zur Ermittlung des Druschverlustes ist das mittels einer solchen Verlustprüfschale gesammelte Stroh, Spreu und Korn zu trennen, um die letztendlich gesammelten Verlustkörner zählen oder auswiegen zu können. Nachteilig bei den bekannten Verlustprüfschalen ist es, dass der Trennprozess zur Trennung von Spreu, Stroh und Korn sehr aufwendig und schwierig durchzuführen ist.

Die Aufgabe der Erfindung ist es, eine Verlustprüfschale anzugeben, die eine vereinfachte Trennung von Stroh, Spreu und Korn und hierdurch eine vereinfachte Ermittlung der Druschverluste gestattet.

Diese Aufgabe wird erfindungsgemäß durch eine Verlustprüfschale gemäß Anspruch 1 sowie ein System gemäß Anspruch 11 gelöst. Vorteilhafte Weiterbildungen der Erfindung sind in den Unteransprüchen angegeben.

Besonders vorteilhaft bei der Verlustprüfschale zur Bestimmung des Druschverlustes von Erntemaschinen, die dazu vorgesehen ist, auf dem Boden abgelegt und von einem Mähdrescher beim Drusch zumindest teilweise überfahren zu werden und dem Auffangen der Verlustkörner sowie von Stroh und Spreu dient, ist es, dass die Verlustprüfschale an ihrer Oberseite Querrillen sowie einen seitlich an der Verlustprüfschale an einem Ende der Querrillen angeordneten Sammler aufweist.

Vorzugsweise wird die Verlustprüfschale derart auf dem Boden abgelegt, dass die Querrillen quer zur Fahrtrichtung der Erntemaschine ausgerichtet sind. Dies ist jedoch nicht zwingend, da die Ausrichtung der Querrillen in Bezug auf die Fahrtrichtung der Erntemaschine keinen Einfluss auf die Ermittlung der Druschverluste hat. Es werden jedoch die Verlustkörner besser gehalten, sofern die Querrillen quer zur Fahrtrichtung der Erntemaschine ausgerichtet sind. Die Querrillen dienen dazu, die Körner in den Querrillen zu sammeln und vereinfachen die Trennung von Stroh, Spreu und Korn, da sich bei einem Schütteln der Verlustprüfschale und einem Windsichten des aufgefangenen Materials die Körner am Boden der Querrillen ablegen und sodann auf eine einfache Art und Weise dem sowie einen seitlich an der Verlustprüfschale an einem Ende der Querrillen angeordneten Sammler zugeführt werden können und sodann eine exakte Ermittlung des Druschverlustes erfolgen kann.

Vorzugsweise weisen die Querrillen einen sägezahnförmigen Querschnitt auf, insbesondere kann die Ausrichtung der Sägezähne der Fahrtrichtung des Mähdreschers entsprechen. Mit einem sägezahnförmigen Querschnitt ist somit gemeint, dass die Querrillen einen dreieckigen Querschnitt aufweisen, sodass durch die untere Ecke des Dreiecks als tiefster Punkt eine ausgeprägte Vertiefung in den Querrillen ausgebildet wird, in der sich die Körner ablegen.

Erfindungsgemäß ist der Sammler durch ein in entsprechenden Aufnahmen der Verlustprüfschale drehbar angeordnetes Rohr mit einem oder mehreren in Achsrichtung des Rohres hintereinander angeordneten zur Rohrachse parallelen Wanddurchbrechungen zur Aufnahme der Verlustkörner aus den Querrillen in das Rohr gebildet. Die Wanddurchbrechungen sind durch achsparallele Schlitze in der Rohrwand gebildet. Durch ein Verdrehen des Rohres um seine Achse können diese Schlitze dementsprechend in eine Position relative zu den Querrillen gebracht werden, sodass ein Einfließen der Körner aus den Querrillen der Verlustprüfschale bei einem Schräghalten der Verlustprüfschale in den als Rohr ausgebildeten Sammler ermöglicht ist.

Der Sammler kann somit als ein drehbar gelagertes Rohr, vorzugsweise als Edelstahlrohr ausgebildet sein, welches auf seinem Umfang versetzt zueinander beispielsweise zwei jeweils über die Hälfte der Länge der Verlustprüfschale verlaufende Schlitze aufweist. Durch das entsprechende Verdrehen des Sammlers relativ zu der Verlustprüfschale können somit jeweils abschnittweise die in der Querrillen der Verlustprüfschale gesammelten Verlustkörner durch die Schlitze in den Sammler überführt werden. Dabei ist das drehbare Rohr vorzugsweise in einer durchsichtigen Kunststoffumhüllung beispielsweise aus PVC oder Polyurethan aufgenommen, sodass der Benutzer die Position der Durchbrüche des als Rohr ausgebildeten Sammlers relativ zu den Querrillen der Verlustprüfschale sehen kann. Die Kunststoffumhüllung ist als Hülse ausgebildet, die koaxial zu dem als Rohr ausgebildeten Sammler angeordnet ist und einen zur Drehachse des Rohres achsparallelen seitlichen Schlitz unmittelbar neben dem Endbereich der Querrillen aufweist. Durch ein solches Verdrehen des Rohres in der Hülse kann der Schlitz in dem Sammler in Deckung mit dem Schlitz in der Hülse gebracht werden, sodass die Verlustkörner von den Querrillen in de Sammler geschoben werden können.

Vorzugsweise ist der Sammler durch ein in entsprechenden Aufnahmen der Verlustprüfschale drehbar angeordnetes Rohr gebildet ist, wobei ein erstes Ende des Rohres verschlossen und das gegenüberliegende zweite Ende des Rohres einen Messbecher aufnimmt. Insbesondere kann der Messbecher eine Kulissenführung aufweisen, die zumindest einen Vorsprung am Umfang des Rohres aufnimmt.

Die Kulissenführung in der Messbecherwand, die einen Vorsprung am Umfang des den Sammler bildenden Rohres aufnimmt, bildet eine formschlüssige, drehfeste Verbindung von Messbecher und Sammler und ermöglicht wiederum das Abnehmen des Messbechers von dem Sammler zur weiteren Auswertung der gesammelten Verlustkörner beispielsweise durch ein Auswiegen mittels einer Waage zur Ermittlung des Druschverlustes.

Vorzugsweise weist die Verlustprüfschale einen rechteckigen Rahmen aus Metallleisten, insbesondere Metallwinkelleisten, auf, der einen Kunststoffeinsatz aufnimmt, wobei der Kunststoffeinsatz die Querrillen aufweist oder wobei der Rahmen aus Metallleisten in die aus Kunstsoff gebildete Verlustprüfschale eingegossen ist, insbesondere an der Unterseite in die Verlustprüfschale eingegossen ist. Hierdurch wird der Schwerpunkt der Verlustprüfschale nach unten verlagert und ein Umkippen der Verlustprüfschale wird verhindert. Durch einen solchen Rahmen aus Metallleisten, der als Schweißkonstruktion ausgeführt sein kann, wird die gesamte Verlustprüfschale versteift und hierdurch robuster.

Bevorzugt weist die Verlustprüfschale einen Sender auf, der ein akustisches Signal und/oder ein Funksignal zur Ortung der Verlustprüfschale aussendet, insbesondere kann das Funksignal zur Herstellung einer Funkverbindung zu einem Handgerät insbesondere nach einem Bluetooth-Standard dienen.

Das Ortungssignal kann insbesondere mittels eines Handgerätes wie beispielsweise ein Mobilfunkendgerät mit einer entsprechenden Applikation zur Auswertung der Ortungssignale ausgewertet werden, um das Auffinden der Verlustprüfschale auf der zu mähenden Fläche unter dem Stroh zu erleichtern.

Um nach der Ablage die Verlustprüfschale insbesondere bei Schwadablage schnell wiederfinden zu können, verfügt die Verlustprüfschale daher bevorzugt über einen kleinen Sender. Dieser kommuniziert mit einer Applikation auf einem Handgerät wie beispielsweise einem Mobilfunkendgerät über eine Bluetooth-Verbindung und einer Reichweite von ca. 50 m.

Vorzugsweise weist die Oberfläche der Verlustprüfschale zumindest teilweise eine Signalfarbe auf. Auch hierdurch wird das Auffinden der Verlustprüfschale erleichtert.

Bevorzugt weist die Verlustprüfschale an ihrer Unterseite zumindest einen quer über zumindest einen Teil der Breite der Verlustprüfschale verlaufende Kante auf.

Vorzugsweise weist die Verlustprüfschale an ihrer Unterseite mehrere quer über zumindest einen Teil der Breite der Verlustprüfschale verlaufende Rillen auf.

In diesem Fall ist mit der Bezeichnung quer tatsächlich eine Ausrichtung senkrecht zur Fahrtrichtung der Erntemaschine bezeichnet, damit die Stoppeln an dieser Kante in Eingriff kommen. Diese Kante dient somit dazu, mit den Stoppeln auf der gemähten Fläche in Eingriff zu kommen, sodass die während der Fahrt des Mähdreschers abgeworfene Verlustprüfschale von den Stoppeln gehalten und gebremst wird.

Die Verlustprüfschale ist an ihrer Unterseite mit einer Kante versehen und zusätzlich über die halbe Schalenbreite mit stabförmigen Vertiefungen von beispielsweise 8mm, die somit mehrere quer verlaufende Rillen bilden. Die Kante und Vertiefungen dienen bei langen Stoppeln (beispielsweise 30 cm bis 40 cm) wie im Raps, die Verlustprüfschale beim Herausrutschen nicht senkrecht sich zwischen die Stoppel zu stellen. Bei Ablegen der Verlustprüfschale wird diese dann mit den langen Rapsstoppeln abgebremst und gehalten, so dass die Verlustprüfschale oben auf den Stoppeln waagerecht liegt und nicht zur Seite kippt, wodurch die Messung des Druschverlustes verfälscht würde.

In einer bevorzugten Ausführungsform weist die Verlustprüfschale an ihrer Oberseite eine abnehmbare Auflage auf, die der Kontur der Oberseite der Verlustprüfschale angepasst ist und in den Querrillen Durchbrüche aufweist, durch die einzelne Körner von Feldfrüchten hindurchtreten können, insbesondere dass die Auflage formschlüssig an der Verlustprüfschale befestigt ist.

Die Auflage bildet somit eine entsprechende Negativform gegenüber der Oberseite der Verlustprüfschale als Positivform, ist also in ihrer Kontur an die Oberseite der Verlustprüfschale angepasst.

Insbesondere für Raps und Feinsämereien sowie Sonnenblumen ist eine zusätzliche Auflage vorgesehen, die der Oberfläche der Verlustprüfschale und somit den sägezahnförmigen Querrillen angepasst ist. Die Auflage kann aus 1 mm dicken flexiblen durchsichtigen Kunststoff bestehen und ist in der Passform so geformt, dass etwas Freiraum im unteren Bereich der Querrillen entsteht. In diesen Vertiefungen der Auflage sind mit mehreren Unterbrechungen über die gesamte Länge der Querrillen Löcher eingebracht. Die Lochgröße richtet sich nach dem zu erntenden Material (z.B. Raps 3mm). Hiermit können die sehr kleinen Körner sicher und schnell von Kaff und Stroh getrennt werden.

Vorzugsweise weist die Verlustprüfschale einen Vibrationsmotor aufweist, insbesondere dass die Verlustprüfschale einen Vibrationsmotor mit integrierten Akkumulatoren zum Betrieb des Vibrationsmotors auf, insbesondere aufweisend einen Stecker oder eine Steckerbuchse zur Herstellung einer Steckverbindung zum externen Aufladen der Akkumulatoren.

Ein weiteres Hilfsmittel, um den Trennprozess Korn / Spreu / Stroh zu beschleunigen, ist ein in die Verlustprüfschale integrierter Vibrationsmotor. Dieser wird über einen Schalter ein- und ausgeschaltet. Die Stromversorgung liefern beispielsweise vier integrierte 9-Volt Akkumulatoren, die über ein Mini-USB-Kabel geladen werden können. Erfahrungsgemäß beträgt die Akku-Laufzeit ca. 60 Minuten, was für eine Mehrzahl von Messungen ausreicht und sämtliche erforderlichen Messungen für den Betrieb eines Mähdreschers für zumindest einen Arbeitstag abdeckt.

Durch die entstehende Vibration gelangen die schweren Teile, sprich Körner in Schwingungen, so dass die leichten Teile besser weggeblasen werden können. Die Körner sammeln sich am Boden der Querrillen, während der leichten Teile sich an der Oberseite der Verlustprüfschale sammeln. Hierdurch können Stroh und Spreu auf leichte Weise durch Windsichten vom Korn getrennt werden. Dieses beschleunigt das Auswerten der Kornverluste.

Dann verbleiben die gereinigten Körner in den Dreiecksleisten der Schale. Nun gilt es diese zu sammeln und zu wiegen. Hierzu der durch ein Edelstahlrohr gebildete Sammler der Auffangeinrichtung so weit gedreht, dass senkrecht zu den Dreiecksleisten der erste Schlitz am Rohr freigegeben wird. Die Verlustkörner können nun in den Sammler geschoben werden. Danach wird das Edelstahlrohr weitergedreht, bis der zweite Schlitz ebenso senkrecht steht und auch hier die Körner aus den Leisten in den durch das Rohr gebildeten Sammler geschoben werden können.

Sind alle Körner in dem Edelstahlrohr, wird dieses so weit gedreht, dass die Schlitze verschlossen sind. Eine beschriftete Anzeige hilft hier dem Anwender, in welcher Position sich das Rohr befindet. Nun muss nur noch die Verlustprüfschale mitsamt dem seitlich an der Verlustprüfschale angeordneten Sammler senkrecht aufgestellt werden, sodass die sich in dem Edelstahlrohr befindlichen Körner in den abnehmbaren Messbecher rutschen. Dieser Messbecher wird dann von dem Sammler der Schale getrennt und das Nettogewicht der Verlustkörner kann mittels einer Feinwaage bestimmt werden.

Eine Berechnungsformel ermöglicht das Berechnen des Druschverlustes in Prozent. Vorteil dieses Verfahrens ist, dass die Körner nicht zeitaufwendig gezählt werden müssen und bei der Verwiegung auch alle zerstörten Körner (Bruchkörner) erfasst werden. Zudem benötigt man kein Tausendkorngewicht.

Vorzugsweise ist die Verlustprüfschale von einer Ablagevorrichtung aufgenommen und auslösbar gehalten, insbesondere elektromagnetisch gehalten.

Dabei ist die Ablagevorrichtung zur Anordnung an einer Erntemaschine wie beispielsweise einem Mähdrescher vorgesehen und eine Auslösung und Ablage der Verlustprüfschale kann insbesondere über eine Ansteuerung über die Maschinensteuerung des Mähdreschers und/oder über ein Funksignal über ein Handgerät wie beispielsweise ein Mobilfunkendgerät mit einer entsprechenden Applikation erfolgen.

Die Ablagevorrichtung kann Klappen aufweisen oder ähnlich einer Schublade aufgebaut sein zum gezielten Ablegen der Verlustprüfschale bei langen Stoppeln wie Raps oder Sonnenblumen. Die Position der Ablagevorrichtung unter dem Schrägförderer ist bevorzugt in Fahrtrichtung links, jedoch letztendlich beliebig und kann den jeweiligen Gegebenheiten am Fahrzeug sowie den jeweiligen Anforderungen angepasst werden.

Die Befestigung der Ablagevorrichtung an einer Erntemaschine kann insbesondere mittels Schraubverbindungen und/oder Klemmverbindungen und/oder magnetisch erfolgen.

Besonders vorteilhaft ist ein System aus zumindest einer erfindungsgemäßen Verlustprüfschale und einer Ablagevorrichtung zur Anordnung an einer Erntemaschine.

Vorzugsweise umfasst das System ferner einen Handventilator zur Durchführung eines Windsichtens der mittels der Verlustprüfschale aufgefangenen Verlustkörner sowie von Stroh und Spreu. Bei dem Handventilator handelt es sich bevorzugt um einen Handventilator mit einem wiederaufladbaren Akkumulator.

In einer weiteren bevorzugten Ausführungsform umfasst das System ferner eine Waage, insbesondere eine batteriebetriebene Waage, insbesondere eine Feinwaage.

Bei der Waage handelt es sich vorzugsweise um eine Feinwaage, die eine exakte Bestimmung auch kleinster Massen von Verlustkörnern gestattet.

Zur Auswertung der Kornverluste gibt es somit in dem System neben der Verlustprüfschale zwei weitere Hilfsmittel. Einen Handventilator zum Trennen von Stroh und Spreu vom Korn und eine Feinwaage zur Ermittlung des Verlustkorngewichts.

Das sich in der Verlustprüfschale befindliche Stroh-Spreu-Korngemisch kann nun sehr einfach getrennt werden, indem man die Verlustprüfschale waagerecht hin und her schüttelt. Die leichten und groben Teile (Stroh und Spreu) wandern nach oben und die schweren Teile (Korn) wandern nach unten und es findet somit eine Sortierung in den Rillen der Verlustprüfschale statt.

Das leichte Stroh kann nun schnell mit der Hand von der Verlustprüfschale entfernt werden, für die Spreu und Feinanteile kommt nun der Handventilator, der in mehreren Leistungsstufen regelbar ist, zum Einsatz. Der Vibrationsmotor beschleunigt das Trennen der Körner, indem diese in Schwingungen versetzt werden. Die Spreu- und Feinanteile lassen sich nun von den Körnern wegblasen, da diese in den dreieckigen Rillen der Verlustprüfschale gehalten werden und anschließend in dem Sammler an der Seite der Verlustprüfschale geleitet werden können.

In einer bevorzugten Ausführung umfasst das System ferner eine auf einem Handgerät, insbesondere einem Mobilfunkendgerät, installierbare und ausführbare Applikation, mittels derer aus Messergebnissen einer Wägung von Verlustkörnern beim Drusch der Druschverlust berechenbar ist und/oder mittels derer die Position der Verlustprüfschale feststellbar ist.

Um eine genaue Verlustprüfung durchzuführen, ist es sinnvoll die Maschine auf Schwadablage zu stellen und den Spreuverteiler wegzuklappen. Somit liegen die Gesamtverluste auf Maschinenbreite hinter der Maschine. Bei Häckselbetrieb ist eine Verlustprüfung ebenso möglich, nur die Verteilung der Verlustkörner auf die gesamte Arbeitsbreite ist, je nach Maschinentyp und Hersteller, nicht gleichmäßig.

Die Maschine wird an die im Bordcomputer angezeigte Verlustgrenze bei Schwadablage bzw. im Häckselbetrieb an die Leistungsgrenze gefahren. Unter Beobachtung der prozentualen Motorauslastung, der Fahrgeschwindigkeit [km/h], des Ertrages [t/ha] und des Durchsatzes [t/h] sowie das Anzeigen der Verlustsensoren lässt der Mähdrescherfahrer mittels eines in der Kabine verbauten Schalters oder unter Nutzung einer Funkverbindung mittels eines Handsenders und der unter dem Schrägförderer installierten Transport- und Ablageeinrichtung die Verlustprüfschale auf die Stoppel gleiten. Nach ca. 25m wird die Maschine gestoppt und der Mähdrescherfahrer kann mit der Auswertung beginnen.

Die Ablageeinheit ist vorzugsweise unter dem Schrägförderer des Mähdreschers in Fahrtrichtung links verbaut. Das bedeutet, dass bei Schwadablage immer die linke Schwadhälfte bis über die Schwadmitte die Gesamtverluste aufgefangen werden. Somit wird bei den Schüttlermaschinen immer der linke Sensor im Schüttler erfasst. Das Gleiche gilt auch für Hybrid- und Rotormaschinen. Ein weiterer Vorteil besteht darin, dass das Einsetzen der Verlustprüfschale in die Ablageeinrichtung immer von der Seite (ohne unter die Maschine zu gehen) durchgeführt werden kann.

Zur Auswertung der Kornverluste weist das erfindungsgemäße System neben der Verlustprüfschale zwei weitere Hilfsmittel auf. Einen Handventilator zum Trennen der Spreu vom Korn und eine Feinwaage zur Ermittlung des Verlustkorngewichts.

Das sich in der Verlustprüfschale befindliche Stroh-Spreu-Korngemisch kann nun sehr einfach getrennt werden, indem man die Verlustprüfschale waagerecht hin und her schüttelt. Das Ganze funktioniert ähnlich wie ein Vorbereitungsboden, die leichten groben Teile Stroh und Spreu gehen nach oben und die schweren Teile, das Korn gehen nach unten und wandern in die Querrillen der Verlustprüfschale und es findet somit eine Sortierung statt.

Das leichte Stroh kann nun schnell mit der Hand von der Schale entfernt werden, für die Spreu und Feinanteile kommt nun der Handventilator, der in mehreren Leistungsstufen regelbar ist, zum Einsatz. Die Spreu und Feinanteile lassen sich nun von den Körnern wegblasen, da diese in den Querrillen der Verlustprüfschale gehalten werden.

Ein weiteres Hilfsmittel um den Trennprozess Korn / Spreu / Stroh zu beschleunigen, ist ein in die Verlustprüfschale integrierter Vibrationsmotor. Dieser wird über einen Schalter ein- und ausgeschaltet. Die Stromversorgung liefern vier integrierte 9Volt Akkumulatoren, die jederzeit über ein Mini-USB-Kabel geladen werden können. Die Laufzeit beträgt ca. 60 Minuten.

Durch die entstehende Vibration gelangen die schweren Teile, sprich Körner in Schwingungen, so dass die leichten Teile besser weggeblasen werden können. Dieses beschleunigt das Auswerten der Kornverluste.

Dann verbleiben die gereinigten Körner in den Querrillen der Schale. Da die Querrillen der Verlustprüfschale einen dreieckigen Querschnitt aufweisen, sammeln sich alle Körner im unteren Bereich der Querrillen der Verlustprüfschale. Anschließend werden die Körner gesammelt und gewogen.

Hierzu der durch ein Edelstahlrohr gebildete Sammler der Auffangeinrichtung so weit verdreht, dass senkrecht zu den Querrillen der erste Schlitz freigegeben wird. Die Verlustkörner können nun in den Sammler geschoben werden. Danach wird das Edelstahlrohr weitergedreht, bis der zweite Schlitz ebenso senkrecht zur Verlustprüfschale steht und auch hier die Körner aus den Querrillen in den Behälter geschoben werden können.

Der Sammler ist somit als ein drehbar gelagertes Edelstahlrohr ausgebildet, welches auf seinem Umfang versetzt zueinander zwei jeweils über die Hälfte der Länge der Verlustprüfschale verlaufende Schlitze aufweist. Durch das entsprechende Verdrehen des Sammlers relativ zu der Verlustprüfschale können somit jeweils abschnittweise die in der Querrillen der Verlustprüfschale gesammelten Verlustkörner durch die Schlitze in den Sammler überführt werden und sodann aus dem Sammler weiter in den Messbecher verbracht werden.

Sind alle Körner in dem Edelstahlrohr gesammelt, wird dieses so weit verdreht, dass die Schlitze verschlossen sind. Eine beschriftete Anzeige hilft hier dem Anwender, in welcher Position sich das Rohr befindet. Nun ist nur noch die Verlustprüfschale senkrecht aufzustellen, sodass die in dem Edelstahlrohr befindlichen Körner in den abnehmbaren Messbecher rutschen. Dieser Messbecher ist dann von der Verlustprüfschale zu trennen und das Nettogewicht der Verlustkörner ist mit einer Feinwaage zu bestimmen.

Eine Berechnungsformel ermöglicht das Berechnen der Druschverluste in Prozent. Der Vorteil dieses Verfahrens ist, dass die Körner nicht zeitaufwendig gezählt werden müssen und bei der Verwiegung auch alle zerstörten Körner (Bruchkörner) erfasst werden. Zudem benötigt man kein Tausendkorngewicht.

Ein Ausführungsbeispiel der Erfindung ist in den Figuren dargestellt und wird nachfolgend erläutert. Es zeigen:

Fig. 1: Eine Draufsicht auf eine Verlustprüfschale;

Fig. 2 einen Ausschnitt eines Schnittes senkrecht zu den Querrillen der Verlustprüfschale nach Fig. 1;

Fig. 3 einen Ausschnitt eines Schnittes senkrecht zu den Querrillen der Verlustprüfschale mit zusätzlicher gelochter Auflage

Fig. 4 eine perspektivische Ansicht eines Details der Querrillen und des Sammlers der Verlustprüfschale;

Fig. 5 eine perspektivische Ansicht einer Ablagevorrichtung zur Aufnahme und Ablage der Verlustprüfschale;

Fig. 6 eine schematische Ansicht der Anordnung der Ablagevorrichtung an einer Erntemaschine und den Prozess des Ablegens einer Verlustprüfschale.

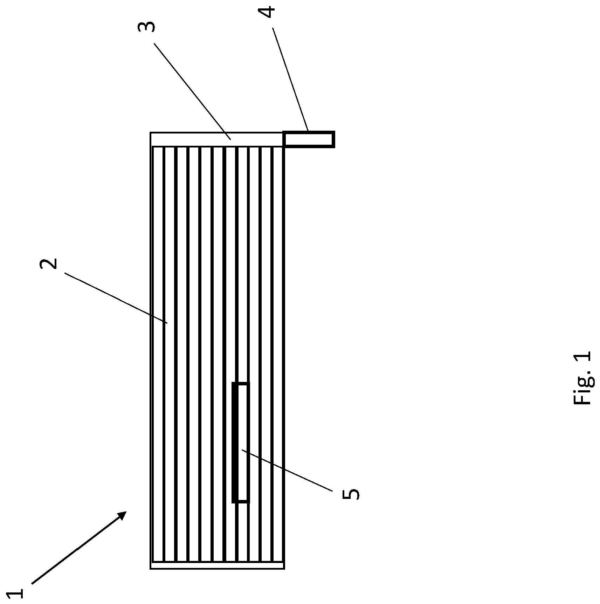

Figur 1 zeigt eine Draufsicht auf die Oberseite einer Verlustprüfschale 1. An der Oberseite weist die Verlustprüfschale 1 von links nach rechts über die gesamte Breite der Verlustprüfschale 1 verlaufende Querrillen 2 auf. Am rechten seitlichen Ende der Verlustprüfschale 1 ist ein Sammler 3 zur Aufnahme der in den Querrillen 2 gesammelten Verlustkörner angeordnet. Das in der Darstellung nach Figur 1 obere Ende des Sammlers 3 ist verschlossen, während das in der Darstellung nach Figur 1 untere Ende des Sammlers 3 einen abnehmbaren Messbecher 4 trägt und das untere Ende des Sammlers 3 zum Messbecher 4 hin offen ist, um die in den Sammler 3 überführten Verlustkörner in den Messbecher 4 weiterleiten zu können. Der Messbecher 4 ist abnehmbar, sodass die gesammelten Verlustkörner sodann mittels einer Feinwaage ausgewogen werden können, um sodann unter Anwendung der entsprechenden Berechnungsformel des Druschverlust zu berechnen. Ferner weist die Verlustprüfschale 1 einen integrierten Vibrationsmotor 5 sowie die zur Energieversorgung des Vibrationsmotors 5 benötigten Akkumulatoren auf. Ein Einschalten des Vibrationsmotors 5 bewirkt die Erzeugung einer Vibration der Verlustprüfschale 1 und dient der Trennung von dem auf der Oberseite auf den Querrillen 2 aufliegenden Stroh, Spreu und Korn. Die Vibration bewirkt ein Absinken des Korns in die Querrillen 2, während die leichteren Bestandteile Stroh und Spreu nach oben wandern. Der Vibrationsmotor 5 wird über einen an der Verlustprüfschale 1 angeordneten Schalter ein- und ausgeschaltet.

Der Messbecher 4 weist eine Kulissenführung auf, die einen nockenförmigen Vorsprung am Umfang des Sammlers 3 aufnimmt. Die Kulissenführung in der Messbecherwand, die einen nockenförmigen Vorsprung am Umfang des den Sammler 3 bildenden Rohres aufnimmt, bildet eine formschlüssige, drehfeste Verbindung von Messbecher 4 und Sammler 3 und ermöglicht wiederum das Abnehmen des Messbechers 4 von dem Sammler 3 zur weiteren Auswertung der gesammelten Verlustkörner durch ein Auswiegen mittels einer Waage zur Ermittlung des Druschverlustes.

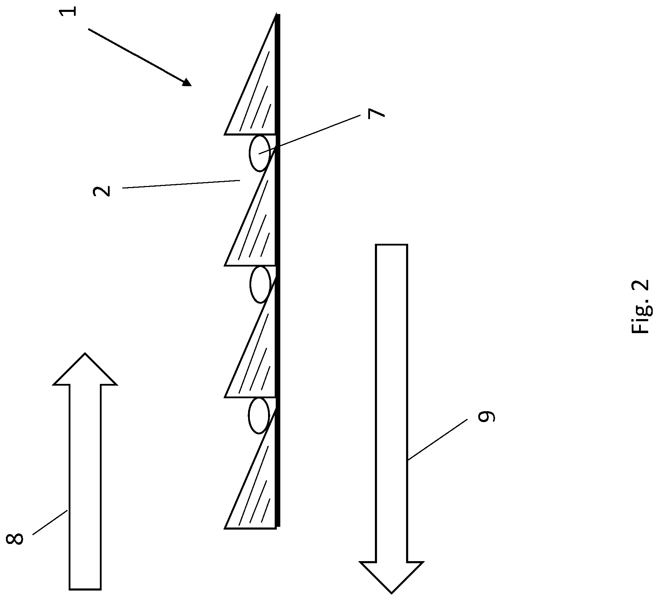

Figur 2 zeigt Ausschnitt eines Schnittes senkrecht zu den Querrillen 2 der Verlustprüfschale 1 nach Fig. 1. Die Querrillen 2 weisen einen sägezahnförmigen Querschnitt auf, um das Auffangen der Verlustkörner 7 zu erleichtern. Mit dem Pfeil 8 ist die Richtung des Austrags von Stroh, Spreu und Korn bezeichnet, während der Pfeil 9 die Fahrtrichtung der Erntemaschine wie beispielsweise eines Mähdreschers bezeichnet. In den Querrillen 7 sammeln sich die Verlustkörner 7. Der sägezahnförmige Querschnitt der Querrillen 2 gegen die Richtung des Austrags von Stroh, Spreu und Korn dient ferner dazu, ein Herunterfallen von Stroh, Spreu und Korn zu vermeiden, da ansonsten die Messresultate verfälscht werden könnten. Ferner wird das Trennen von Stroh, Spreu und Korn zur weiteren Auswertung durch die Geometrie der Querrillen 2 erleichtert.

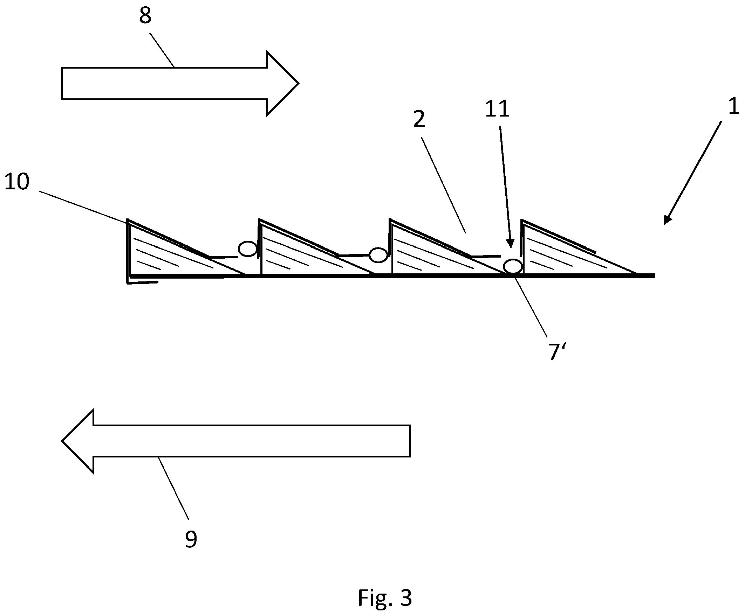

Figur 3 zeigt Ausschnitt eines Schnittes senkrecht zu den Querrillen 2 der Verlustprüfschale 1 mit zusätzlicher gelochter Auflage 10. Die Ablage 10 ist abnehmbar formschlüssig an der Verlustprüfschale 1 festgelegt und ist der Kontur der Oberseite der Verlustprüfschale 1 mit den Querrillen 2 angepasst. Das bedeutet, dass die Auflage 10 somit eine entsprechende Negativform gegenüber der Oberseite der Verlustprüfschale 1 als Positivform bildet, wobei die Auflage 10 im Bereich der tiefsten Stellen der Querrillen 2 einen Abstand zur Verlustprüfschale 1 einhält und in diesen Bereichen Durchtrittslöcher 11 aufweist. Die Durchtrittslöcher dienen dem Durchlass der Verlustkörner 7'.

Insbesondere für Raps und Feinsämereien sowie Sonnenblumen ist diese zusätzliche Auflage 10 vorgesehen, die der Oberfläche der Verlustprüfschale 1 und somit den sägezahnförmigen Querrillen 2 angepasst ist. Die Auflage 10 ist aus ca. 1 mm dicken flexiblen durchsichtigen Kunststoff gebildet und ist in der Passform so geformt, dass etwas Freiraum im unteren Bereich der Querrillen 2 entsteht. In diesen Vertiefungen der Auflage 10 sind mit mehreren Unterbrechungen über die gesamte Länge der Querrillen 2 Durchtrittslöcher 11 eingebracht. Die Lochgröße richtet sich nach dem zu erntenden Material (z.B. Raps 3mm). Hiermit können die sehr kleinen Körner 7' sicher und schnell von Kaff und Stroh getrennt werden.

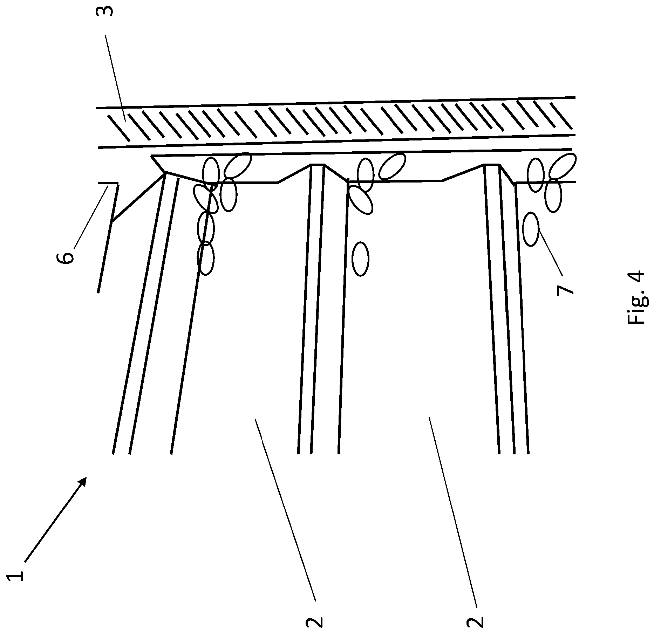

Figur 4 zeigt eine perspektivische Ansicht eines Details der Querrillen 2 und des Sammlers 3 der Verlustprüfschale 1. Der Sammler 3 ist durch ein in einer Hülse 6 drehbar angeordnetes Rohr gebildet. Die Hülse 6 weist auf der Höhe der Querrillen 2 einen zur Achse der Hülse 6 parallelen Schlitz auf, sodass die in den Querrillen 2 gesammelten Verlustkörner durch diesen Schlitz hindurchtreten können. Das den Sammler 3 bildende Rohr weist wiederrum zwei am Umfang versetzt angeordnete achsparallele Schlitze auf, die jeweils die Hälfte der Länge der Verlustprüfschale 1 abdecken. Mit der Länge der Verlustprüfschale 1 ist die Erstreckung der Verlustprüfschale 1 senkrecht zu den Querrillen 2 bezeichnet. Durch ein Verdrehen des den Sammler 3 bildenden Rohres kann somit nacheinander jeweils einer der beiden Schlitze in dem den Sammler 3 bildenden Rohr mit dem Schlitz in der Hülse 6 in Deckung gebracht werden, um sodann abschnittweise aus dem jeweiligen Teil der Verlustprüfschale 1 aus den Querrillen 2 die gesammelten Verlustkörner in den Sammler 3 zu überführen. Sobald dies für den ersten Teilabschnitt der Verlustprüfschale 1 erledigt ist, kann durch ein weiteres Verdrehen des den Sammler 3 bildenden Rohres der zweite umfangsversetzt angeordnete Schlitz Schlitze in dem den Sammler 3 bildenden Rohr mit dem Schlitz in der Hülse 6 in Deckung gebracht werden, um sodann aus dem zweiten Teilabschnitt der Verlustprüfschale 1 die in den Querrillen 2 gesammelten Verlustkörner in den Sammler 3 zu überführen.

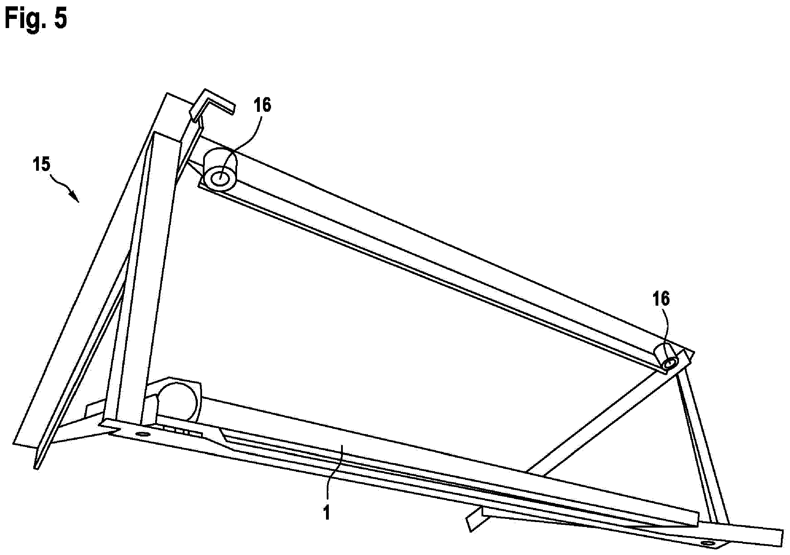

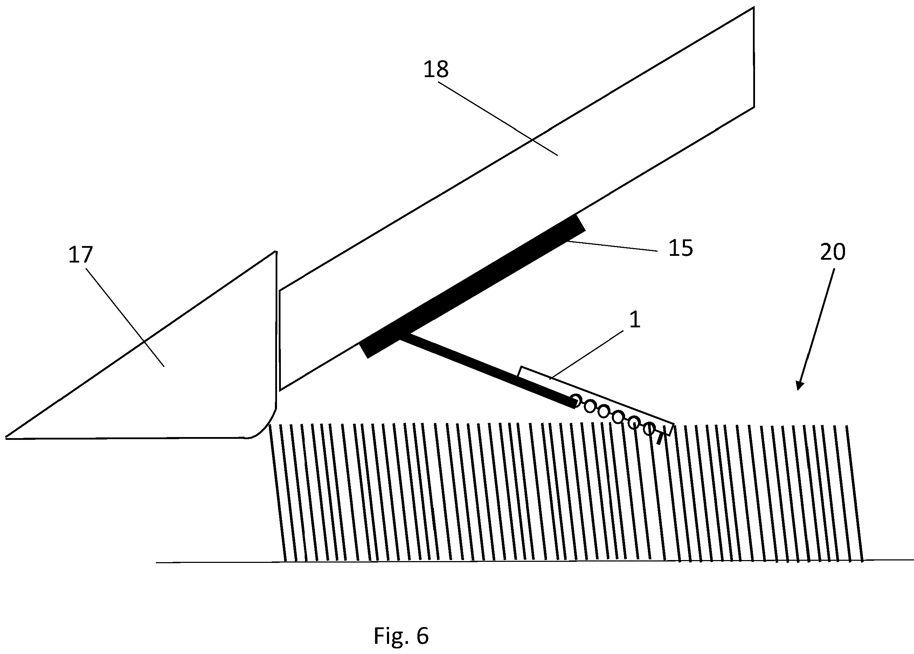

Figur 5 zeigt eine perspektivische Ansicht einer Ablagevorrichtung 15 zur Aufnahme und Ablage der Verlustprüfschale 1. Figur 6 zeigt eine schematische Ansicht der Anordnung der Ablagevorrichtung 15 am Schrägförderer 18 unmittelbar hinter dem Schneidwerk 17 Erntemaschine und den Prozess des Ablegens der Verlustprüfschale 1 auf den Stoppeln 20 des gemähten Feldes.

Die Ablagevorrichtung 15 zur Aufnahme und Ablage der Verlustprüfschale 1 wird an der Erntemaschine befestigt. In der Ablagevorrichtung 15 ist die Verlustprüfschale 1 aufgenommen in einer nach hinten und nach unten gerichteten Aufnahme und hierin elektromagnetisch gehalten. Mittels einer Fernauslösung können die Elektromagnete 16 deaktiviert werden, sodass die Verlustprüfschale 1 ähnlich einer Schublade aus der Ablagevorrichtung 15 herausgleitet und auf den Stoppeln 20 des gemähten Feldes abgelegt wird.

Die Verlustprüfschale 1 weist an ihrer Unterseite eine hintere, nach unten abstehende Kante auf und ist zusätzlich über die halbe Schalenbreite mit stabförmigen Vertiefungen von ca. 8mm Tiefe versehen, die somit mehrere quer verlaufende Rillen an der Unterseite der Verlustprüfschale 1 bilden. Die Kante und Vertiefungen dienen bei langen Stoppeln 20 von beispielsweise 30 cm bis 40 cm Höhe wie im Raps, dazu, die Verlustprüfschale 1 beim Herausrutschen nicht senkrecht sich zwischen die Stoppel 20 zu stellen, sondern stattdessen waagerecht auf den Stoppeln 20 abzulegen. Bei dem Ablegen der Verlustprüfschale 1 wird diese dann von den langen Stoppeln 20 abgebremst und gehalten, so dass die Verlustprüfschale 1 oben auf den Stoppeln 20 waagerecht liegt und nicht zur Seite kippt, wodurch die Messung des Druschverlustes verfälscht würde.

Um das Auffinden der Verlustprüfschale 1 nach dem Ablegen insbesondere bei einer Schwadablage zu erleichtern ist die Verlustprüfschale 1 mit einem Sender ausgestattet, der ein Funksignal zur Ortung der Verlustprüfschale 1 aussendet. Dieses Funksignal zur Ortung der Verlustprüfschale 1 kann mittels eines Handgerätes ausgewertet werden, bei dem in den Figuren dargestellten Ausführungsbeispiel kann eine Funkverbindung von einem Handgerät zu dem Sender der Verlustprüfschale 1 nach einem Bluetooth-Standard aufgebaut werden.

Die in den Figuren dargestellte Verlustprüfschale 1 ist Bestandteil eines Systems, welches neben der Ablagevorrichtung 15 zur Aufnahme und Ablage der Verlustprüfschale 1 ferner einen Handventilator mit integriertem Akkumulator sowie eine Feinwaage zum Auswiegen der Verlustkörner umfasst. Ein weiterer Bestandteil des Systems ist eine auf einem Handgerät, insbesondere einem Mobilfunkendgerät installierbare und ausführbare Applikation, mittels derer aus Messergebnissen einer Messung von Verlustkörnern beim Drusch der Druschverlust berechenbar ist und/oder mittels derer die Position der Verlustprüfschale feststellbar ist.

Die in den Figuren dargestellte Verlustprüfschale 1 weist eine Oberfläche von 0,25 m$^2$ auf. Dementsprechend berechnet sich der Druschverlust nach folgenden Formeln:

Häckseln:

$$\text{Druschverlust in \%} = \text{gemessene Masse der Verlustkörner} / \text{Ertrag [t/ha]} \times 4$$

Schwadablage:

$$\text{Druschverlust in \%} = \text{gemessene Masse der Verlustkörner} / \text{Ertrag [t/ha]} \times \text{Maschinenbreite} / \text{Arbeitsbreite} \times 4$$

Bei einer nicht dargestellten alternativen Ausführungsform weist die Verlustprüfschale eine Oberfläche von 0,33 m$^2$ auf. In diesem Fall berechnet sich der Druschverlust nach folgenden Formeln:

Häckseln:

$$\text{Druschverlust in \%} = \text{gemessene Masse der Verlustkörner} / \text{Ertrag [t/ha]} \times 3$$

Schwadablage:

$$\text{Druschverlust in \%} = \text{gemessene Masse der Verlustkörner} / \text{Ertrag [t/ha]} \times \text{Maschinenbreite} / \text{Arbeitsbreite} \times 3$$

Die vorstehend angegebenen Formeln sind in der Applikation, die Bestandteil des Systems ist, hinterlegt und gestatten eine bequeme Ermittlung des Druschverlustes. Hierzu müssen lediglich die Größe der Verlustschale entsprechend der Messfläche, der Ertrag in t pro ha, die Maschinenparameter Maschinenbreite und Arbeitsbreite sowie die gemessene Masse der Verlustkörner eingegeben werden, um den Druschverlust in % zu berechnen.

Sofern der Ertrag alternativ in der in der Landwirtschaft üblichen Größe Doppelzentner pro ha entsprechend einer Dezitonne pro ha angegeben wird, sind die Ergebnisse lediglich mit zehn zu multiplizieren. Auch diese Formeln sind in der Applikation hinterlegt.

**Patentansprüche**

1. Verlustprüfschale (1) zur Bestimmung des Druschverlustes von Erntemaschinen, die dazu vorgesehen ist, auf dem Boden abgelegt und von einem Mähdrescher beim Drusch zumindest teilweise überfahren zu werden und dem Auffangen der Verlustkörner sowie von Stroh und Spreu dient, wobei die Verlustprüfschale (1) an ihrer Oberseite Querrillen (2) sowie einen seitlich an der Verlustprüfschale (1) an einem Ende der Querrillen (2) angeordneten Sammler (3) aufweist, **dadurch gekennzeichnet, dass** der Sammler (3) durch ein in entsprechenden Aufnahmen der Verlustprüfschale (1) drehbar angeordnetes Rohr mit einem oder mehreren in Achsrichtung des Rohres hintereinander angeordneten zur Rohrachse parallelen Wanddurchbrechungen zur Aufnahme der Verlustkörner aus den Querrillen (2) in das Rohr gebildet ist.

2. Verlustprüfschale (1) nach Anspruch 1, **dadurch gekennzeichnet, dass** die Querrillen (2) einen sägezahnförmigen Querschnitt aufweisen.

3. Verlustprüfschale (1) nach einem der vorherigen Ansprüche, **dadurch gekennzeichnet, dass** der Sammler (3) durch ein in entsprechenden Aufnahmen der Verlustprüfschale drehbar angeordnetes Rohr gebildet ist, wobei ein erstes Ende des Rohres verschlossen und das gegenüberliegende zweite Ende des Rohres einen Messbecher (4) aufnimmt, insbesondere dass der Messbecher (4) eine Kulissenführung aufweist, die zumindest einen Vorsprung am Umfang des Rohres aufnimmt.

4. Verlustprüfschale (1) nach einem der vorherigen Ansprüche, **dadurch gekennzeichnet, dass** die Verlustprüfschale (1) einen rechteckigen Rahmen aus Metallleisten, insbesondere Metallwinkelleisten, aufweist, wobei der Rahmen aus Metallleisten in die aus Kunstsoff gebildete Verlustprüfschale (1) eingegossen ist, insbesondere an der Unterseite in die Verlustprüfschale (1) eingegossen ist.

5. Verlustprüfschale (1) nach einem der vorherigen Ansprüche, **dadurch gekennzeichnet, dass** die Verlustprüfschale (1) einen Sender aufweist, der ein akustisches Signal und/oder ein Funksignal zur Ortung der Verlustprüfschale (1) aussendet, insbesondere dass das Funksignal zur Herstellung einer Funkverbindung zu einem Handgerät insbesondere nach einem Bluetooth-Standard dient.

6. Verlustprüfschale (1) nach einem der vorherigen Ansprüche, **dadurch gekennzeichnet, dass** die Verlustprüfschale (1) an ihrer Unterseite zumindest einen quer über zumindest einen Teil der Breite der Verlustprüfschale verlaufende Kante aufweist.

7. Verlustprüfschale (1) nach einem der vorherigen Ansprüche, **dadurch gekennzeichnet, dass** die Verlustprüfschale (1) an ihrer Unterseite mehrere quer über zumindest einen Teil der Breite der Verlustprüfschale verlaufende Rillen aufweist.

8. Verlustprüfschale (1) nach einem der vorherigen Ansprüche, **dadurch gekennzeichnet, dass** die Verlustprüfschale (1) an ihrer Oberseite eine abnehmbare Auflage (10) aufweist, die der Kontur der Oberseite der Verlustprüfschale (1) angepasst ist und in den Querrillen Durchbrüche (11) aufweist, durch die einzelne Körner (7') von Feldfrüchten hindurchtreten können, insbesondere dass die Auflage (10) formschlüssig an der Verlustprüfschale (1) befestigt ist.

9. Verlustprüfschale (1) nach einem der vorherigen Ansprüche, **dadurch gekennzeichnet, dass** die Verlustprüfschale (1) einen Vibrationsmotor (5) aufweist, insbesondere dass die Verlustprüfschale einen Vibrationsmotor mit integrierten Akkumulatoren zum Betrieb des Vibrationsmotors (5) aufweist, insbesondere aufweisend einen Stecker oder eine Steckerbuchse zur Herstellung einer Steckverbindung zum externen Aufladen der Akkumulatoren.

10. Verlustprüfschale (1) nach einem der vorherigen Ansprüche, **dadurch gekennzeichnet, dass** die Verlustprüfschale (1) von einer Ablagevorrichtung (15) aufgenommen und auslösbar gehalten ist, insbesondere elektromagnetisch gehalten ist.

11. System aus zumindest einer Verlustprüfschale (1) nach einem der vorherigen Ansprüche und einer Ablagevorrichtung (15) zur Aufnahme und Ablage der Verlustprüfschale (1).

12. System nach Anspruch 11, **dadurch gekennzeichnet, dass** das System ferner eine Handventilator umfasst, insbesondere einem Handventilator mit einem Akkumulator, zur Durchführung eines Windsichtens der mittels der Verlustprüfschale (1) aufgefangenen Verlustkörner sowie von Stroh und Spreu.

**EP 4 115 724 B1**

13. System nach Anspruch 11 oder 12, **dadurch gekennzeichnet, dass** das System ferner eine Waage umfasst, insbesondere eine batteriebetriebene Waage, insbesondere eine Feinwaage.

14. System nach einem der Ansprüche 11 bis 13, **dadurch gekennzeichnet, dass** das System ferner eine auf einem Handgerät, insbesondere einem Mobilfunkendgerät installierbare und ausführbare Applikation umfasst, mittels derer aus Messergebnissen einer Messung von Verlustkörner beim Drusch der Druschverlust berechenbar ist und/oder mittels derer die Position der Verlustprüfschale (1) feststellbar ist.

**Claims**

1. Loss test panel (1) for determining the threshing loss of harvesters, which is intended to be placed on the ground and at least partially passed over by a combine harvester during threshing and which is used to collect the lost grain, as well as straw and chaff, wherein the loss test panel (1) has transverse grooves (2) on its upper side, as well as a collector (3) arranged laterally on the loss test panel (1) at one end of the transverse grooves (2), **characterized in that** the collector (3) is formed by a tube rotatably arranged in corresponding receptacles of the loss test panel (1) with one or more wall openings parallel to the tube axis arranged one behind the other in the axial direction of the tube for receiving the lost grain from the transverse grooves (2) in the tube.

2. Loss test panel (1) according to claim 1, **characterized in that** the transverse grooves (2) have a saw-tooth shaped cross section.

3. Loss test panel (1) according to any one of the preceding claims, **characterized in that** the collector (3) is formed by a tube rotatably arranged in corresponding receptacles of the loss test panel, wherein a first end of the tube is closed and the opposite second end of the tube accommodates a measuring cup (4), in particular **in that** the measuring cup (4) has a slotted guide, which accommodates at least one projection on the circumference of the tube.

4. Loss test panel (1) according to any one of the preceding claims, **characterized in that** the loss test panel (1) has a rectangular frame made of metal strips, in particular metal angle strips, wherein the frame made of metal strips is embedded in the loss test panel (1) made from plastic, in particular embedded in the loss test panel (1) on the underside.

5. Loss test panel (1) according to any one of the preceding claims, **characterized in that** the loss test panel (1) has a transmitter, which emits an acoustic signal and/or a radio signal for locating the loss test panel (1), in particular **in that** the radio signal is used to establish a radio connection with a hand-held device in line with a Bluetooth standard.

6. Loss test panel (1) according to any one of the preceding claims, **characterized in that** the loss test panel (1) has at least one edge extending transversely over at least part of the width of the loss test panel on its underside.

7. Loss test panel (1) according to any one of the preceding claims, **characterized in that** the loss test panel (1) a plurality of grooves extending transversely over at least part of the width of the loss test panel on its underside.

8. Loss test panel (1) according to any one of the preceding claims, **characterized in that** the loss test panel (1) has a removable support (10) on its upper side, which is adapted to the contour of the upper side of the loss test panel (1) and has openings (11) in the transverse grooves, through which the individual grains (7') of crops can pass, in particular **in that** the support (10) is attached in a form-fitting manner to the loss test panel (1).

9. Loss test panel (1) according to any one of the preceding claims, **characterized in that** the loss test panel (1) has a vibration motor (5), in particular **in that** the loss test panel has a vibration motor with integrated batteries for operating the vibration motor (5), in particular having a plug or a plug socket for creating a plug-in connection for externally charging the batteries.

10. Loss test panel (1) according to any one of the preceding claims, **characterized in that** the loss test panel (1) is accommodated by a storage device (15) and is held releasably, in particular held electromagnetically.

11. System comprising at least one loss test panel (1) according to any one of the preceding claims and a storage device (15) for accommodating and storing the loss test panel (1).

12. System according to claim 11, **characterized in that** the system further comprises a hand-held fan, in particular a hand-held fan with a battery, for performing wind sifting of the lost grain collected by means of the loss test panel (1), as well as straw and chaff.

13. System according to claim 11 or 12, **characterized in that** the system further comprises scales, in particular battery-operated scales, in particular precision scales.

14. System according to any one of claims 11 to 13, **characterized in that** the system further comprises an application that can be installed and run on a hand-held device, in particular a mobile radio terminal, by means of which, based on the measurement results of a measurement of lost grain during threshing, the threshing loss can be calculated and/or by means of which the position of the loss test panel (1) can be determined.

**Revendications**

1. Tablette de contrôle des pertes (1) pour déterminer les pertes de battage de machines de récolte, qui est prévue pour être déposée sur le sol et être traversée au moins partiellement par une moissonneuse-batteuse lors du battage et qui sert à recueillir les grains perdus ainsi que la paille et la balle, dans laquelle la tablette de contrôle des pertes (1) présente sur son côté supérieur des rainures transversales (2) ainsi qu'un collecteur (3) disposé latéralement sur la tablette de contrôle des pertes (1) à une extrémité des rainures transversales (2), **caractérisée en ce que** le collecteur (3) est formé par un tube disposé de manière rotative dans des logements correspondants de la tablette de contrôle des pertes (1) avec une ou plusieurs ouvertures de paroi disposées les unes derrière les autres en direction axiale du tube et parallèles à l'axe de tube pour accueillir les grains perdus provenant des rainures transversales (2) dans le tube.

2. Tablette de contrôle des pertes (1) selon la revendication 1, **caractérisée en ce que** les rainures transversales (2) présentent une section transversale en dents de scie.

3. Tablette de contrôle des pertes (1) selon l'une quelconque des revendications précédentes, **caractérisée en ce que** le collecteur (3) est formé par un tube disposé de manière rotative dans des logements correspondants de la tablette de contrôle des pertes, dans laquelle une première extrémité du tube est fermée et la seconde extrémité opposée du tube accueille un gobelet de mesure (4), en particulier **en ce que** le gobelet de mesure (4) présente un guidage coulissant qui accueille au moins une saillie sur la circonférence du tube.

4. Tablette de contrôle des pertes (1) selon l'une quelconque des revendications précédentes, **caractérisée en ce que** la tablette de contrôle des pertes (1) présente un cadre rectangulaire constitué de baguettes métalliques, en particulier de baguettes d'angle métalliques, dans laquelle le cadre constitué de baguettes métalliques est coulé dans la tablette de contrôle des pertes (1) formée en plastique, en particulier est coulé dans la tablette de contrôle des pertes (1) sur le côté inférieur.

5. Tablette de contrôle des pertes (1) selon l'une quelconque des revendications précédentes, **caractérisée en ce que** la tablette de contrôle des pertes (1) présente un émetteur qui émet un signal acoustique et/ou un signal radio pour localiser la tablette de contrôle des pertes (1), en particulier **en ce que** le signal radio sert à établir une liaison radio avec un appareil portable, en particulier selon une norme Bluetooth.

6. Tablette de contrôle des pertes (1) selon l'une quelconque des revendications précédentes, **caractérisé en ce que** la tablette de contrôle des pertes (1) présente sur son côté inférieur au moins un bord s'étendant transversalement sur au moins une partie de la largeur de la tablette de contrôle des pertes.

7. Tablette de contrôle des pertes (1) selon l'une quelconque des revendications précédentes, **caractérisé en ce que** la tablette de contrôle des pertes (1) présente sur son côté inférieur plusieurs rainures s'étendant transversalement sur au moins une partie de la largeur de la tablette de contrôle des pertes.

8. Tablette de contrôle des pertes (1) selon l'une quelconque des revendications précédentes, **caractérisée en ce que** la tablette de contrôle des pertes (1) présente sur son côté supérieur un support amovible (10) qui est adapté au contour du côté supérieur de la tablette de contrôle des pertes (1) et qui présente dans les rainures transversales des perçages (11) à travers lesquels des grains individuels (7') de cultures peuvent passer, en particulier **en ce que** le support (10) est fixé par complémentarité de formes à la tablette de contrôle des pertes (1).

**9.** Tablette de contrôle des pertes (1) selon l'une quelconque des revendications précédentes, **caractérisée en ce que** la tablette de contrôle des pertes (1) présente un moteur à vibrations (5), en particulier **en ce que** la tablette de contrôle des pertes présente un moteur à vibrations avec des accumulateurs intégrés pour le fonctionnement du moteur à vibrations (5), en particulier présentant une fiche ou une douille de fiche pour la réalisation d'une connexion enfichable pour le chargement externe des accumulateurs.

**10.** Tablette de contrôle des pertes (1) selon l'une quelconque des revendications précédentes, **caractérisée en ce que** la tablette de contrôle des pertes (1) est logée et maintenue de manière déclenchable par un dispositif de dépôt (15), en particulier est maintenue de manière électromagnétique.

**11.** Système composé d'au moins une tablette de contrôle des pertes (1) selon l'une quelconque des revendications précédentes et d'un dispositif de dépôt (15) pour accueillir et déposer la tablette de contrôle des pertes (1).

**12.** Système selon la revendication 11, **caractérisé en ce que** le système comprend en outre un ventilateur manuel, en particulier un ventilateur manuel avec un accumulateur, pour effectuer une séparation par le vent des grains perdus ainsi que de la paille et de la balle collectés au moyen de la tablette de contrôle des pertes (1).

**13.** Système selon la revendication 11 ou 12, **caractérisé en ce que** le système comprend en outre une balance, en particulier une balance alimentée par batterie, en particulier une balance de précision.

**14.** Système selon l'une quelconque des revendications 11 à 13, **caractérisé en ce que** le système comprend en outre une application pouvant être installée et exécutée sur un appareil portable, en particulier un terminal de téléphonie mobile, au moyen de laquelle la perte de grains lors du battage peut être calculée à partir de résultats de mesure d'une mesure de grains perdus et/ou au moyen de laquelle la position de la tablette de contrôle des pertes (1) peut être déterminée.

Fig. 1

Fig. 2

Fig. 3

Fig. 4

EP 4 115 724 B1

**Fig. 5**

EP 4 115 724 B1

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DD 52020 A
- DE 10062114 C2
- DE 102005028997 A1